# EUROPEAN PATENT SPECIFICATION

(11) **EP 1 287 483 B1**
(45) Date of publication and mention of the grant of the patent: **23.12.2009**
(21) Application number: 01932333.6
(22) Date of filing: 08.05.2001
(51) Int. Cl.: G06K 9/00, G06K 7/14, G06K 7/10, G06F 17/30

(54) **METHOD AND DEVICE OF ENCODING AND DECODING**
VERFAHREN UND EINRICHTUNG ZUR CODIERUNG UND DECODIERUNG
PROCEDE ET DISPOSITIF DE CODAGE ET DECODAGE

(30) Priority: 09.05.2000 KR 2000024706; 24.10.2000 KR 2000062597
(43) Date of publication of application: 05.03.2003
(73) Proprietor: Colorzip Media, Inc, Seodaemun-gu, Seoul 120-749 (KR); Han, Tack-Don, Yangcheon-gu, Seoul 121-140 (KR); Cheong, Cheol-Ho, Seodaemun-gu, Seoul 120-823 (KR); Lee, Nam-Kyu, Goyang-city 411-743 (KR); Shin, Eun-Dong, Geumcheon-gu, Seoul 153-030 (KR)
(72) Inventor: HAN, Tack-Don, Yangcheon-gu, Seoul 121-140 (KR); CHEONG, Cheol-Ho,, Seodaemoon-gu, Seoul (KR); LEE, Nam-Kyu, Ilsan-gu, Gyunggi-do,Goyang-city 411-743 (KR); SHIN, Eun-Dong, Geumcheon-gu, Seoul 153-030 (KR)
(74) Representative: Power, Philippa Louise
(86) International application number: PCT/KR2001/000742
(87) International publication number: WO 2001/086582

(56) References cited:
- EP-A- 1 443 452
- WO-A1-97/37321
- CA-C- 2 202 139
- JP-A- 10 055 420
- JP-A- 10 262 154
- US-A- 4 856 820
- US-A- 5 329 105
- US-A- 5 464 974
- US-A- 5 576 528
- US-A- 5 726 435
- US-A- 5 726 435
- US-A- 5 869 828
- US-A- 5 992 748
- RUSS ADAMS: "Bar Code 1 - a Web of Information about Bar Code: 2-Dimensional Bar Code Page"[Online] 31 December 1995 (1995-12-31), pages 1-8, XP002340736 Retrieved from the Internet: URL:http://www.adams1.com/pub/russadam/sta ck.html> [retrieved on 2005-08-16]
- "BARCODE LEXIKON (FIBEL) MIT BARCODE-TYPEN-ÜBERSICHT"[Online] 5 April 2004 (2004-04-05), XP002279811 Retrieved from the Internet: URL:http://www.ruoss-kistler.ch> [retrieved on 2004-05-12]
- AIM GLOBAL NETWORK: "Matrix Bar Code Symbologies"[Online] 20 March 2002 (2002-03-20), XP002310534 Retrieved from the Internet: URL:http://www.aimglobal.org/aimstore/matr ixsymbologies.asp> [retrieved on 2002-03-20]

## Description

### Technical Field

The present invention relates to a method and apparatus for encoding and decoding a machine-readable code image, and more particularly, to a method and apparatus for encoding data into a code using the arrangement of cells expressed in various colors, shades, shapes or patterns or a combination thereof and decoding the encoded code using a computer and its peripheral devices.

### Background Art

Recently, a bar code consisting of lines having various thicknesses has been printed on most products circulating in the open market in order to represent product information such as the type and price of a product.

A bar code is made up of thick lines, thin lines and double lines to represent numerical data in which product information is encoded.

The home page address or uniform resource location such as the Email address of a company is usually printed on a business card for the purpose of general business. Internet home pages contain the promotional contents of companies. When Internet users are interested in a company, they read the promotional contents of the company contained in its internet home page, and then try contacting the company through its E-mail address when they have an inquiry to make. In some cases, the home page address or URL of a specific company is also printed on the advertisement section of magazines or newspapers besides on the business card of the company. Also, published books can have internet home page addresses of companies printed thereon.

In these cases, if a user wants to contact the URL printed on the business card of a company, the URL on the business card, for example, http://comsciyonsei.ac.kr/~nklee, must be typed through a keyboard. Also, if the E-mail address, for example, nklee@Ryonsei.ac.kr, is printed on the business card of a company, users trying to send messages to the E-mail address must type the entire E-mail address.

However, internet home page addresses or E-mail addresses do not consist of one or two letters but generally of over ten letters to several tens of letters. Thus, inputting the home page addresses or E-mail addresses can be a burden to users.

In order to solve this problem, U.S. Patent No. 5,869,828 entitled "color and shape system for encoding and decoding data" discloses a method and system for encoding/decoding character data using a color figure, in which a color figure having a simple structure is printed on the exterior surface of products to represent information on the products.

Printers may have different printing characteristics, so that a color figure may be printed in different colors depending on the type of printers.

That is, if an item of data is encoded into a color figure and the color figure is printed by printers provided by different companies, the shades of the printed color figures may vary depending on the characteristics of each of the printers. Accordingly, in US 5,869,828, even when an identical color figure is printed, different color figures may be obtained due to differences in the printing environment, so that it is likely that the original data encoded in a color figure may not be correctly decoded.

US 5,869,828, against which the claims are delimited, discloses a full colour barcode and a corresponding encoding and decoding system and method in which specific colours are represented as the background of the symbols in order to provide an inherent parity check for the reading of the symbols.

US 5,329,105 discloses a system for decoding a black and white barcode, the barcode having a parity check area containing parity data which represents the information contained in the barcode encoded by a checksum character.

A machine readable code with a background area and cells for encoding user data, where the user data are encoded by the color or shades of the cells is known from US 4,856,820. Bar codes are printed together with human readable information. The machine readable bar code symbols have a white background, the spaces between quiet areas serve as data cells. The color of the black bars distinguishes the bars from the background and serves to encode and express the contents of the information which is also expressed by OCR numbers.

US 5,992,748 describes a two dimensional code with color areas in which data is expressed by color codes corresponding to that data. A one pixel data color is coded in three color areas corresponding to the three primary colors, cyan, magenta and yellow. This allows to encode large amounts of information in a smaller space.

US 3,752,958 and US 3,717,750 disclose three color bar codes with parity.

A generic 2D-barcode is disclosed by US 5,464,974. Size indicia and density indicia are inluded in the perimeter, actual data are stored with up to 400% redundancy.

US 5,329,105 discloses a one-dimensional bar code with check sum character representing a value equivalent to the result of performing a Code 128 checksum computation one the data characters of the bar code. The checksum is used to verify the correctness of the decoding of the code. In addition, the code contains a start character and a stop character including a termination bar.

### Summary of the invention

An objective of the present invention is to provide a machine readable code in which information is expressed by various colors, shades, shapes or patterns or a combination thereof. Another objective of the present invention is to provide a method and apparatus for encoding predetermined information into the above-described code. Still another objective of the present invention is to provide a method and apparatus for decoding a code encoded by the above encoding method to extract the original information. Yet another objective of the present invention is to provide a computer-readable recording medium which records a program for accomplishing the encoding or decoding methods.

The invention is defined by the claims.

### Brief Description of the Drawings

FIGS. 1A through 1E are views illustrating the structure of a machine-readable code according to the present invention;
FIG. 2A shows an example of expressing four colors using two bits,
FIG. 2B shows an example of a code conversion table where various characters are converted into code images, FIG. 2C shows an example of a grayscale code, and FIGS. 2D and 2E show an example of a pattern that can be expressed on each of the cells of a code image;
FIGS. 3A through 3F show various examples of the location of a parity area within a rectangular matrix-type code image;
FIG. 4 shows the structure of a database which stores index information;
FIG. 5 illustrates a process for obtaining target information using index information read from a code image; FIG. 6 is a flowchart illustrating a method of encoding information such as characters into a code image, according to an embodiment of the present invention;
FIG. 7 shows an encoding system according to the present invention;
FIG. 8A is a flowchart illustrating a method of decoding a code image into target information, according to an embodiment of the present invention, and
FIG. 8B is aflowchart illustrating the step 80 of FIG. 8A in greater detail;
FIG. 9 shows a decoding system according to the present invention; and
FIG. 10 shows an example of an advertisement on which a code image is printed according to the present invention.
FIGS. 11A through H show various examples of representing a code image according to the present invention,

### Best mode for carrying out the invention

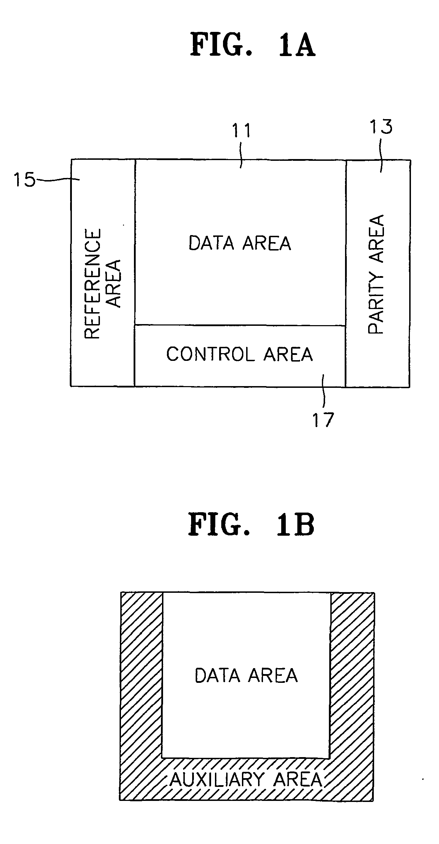

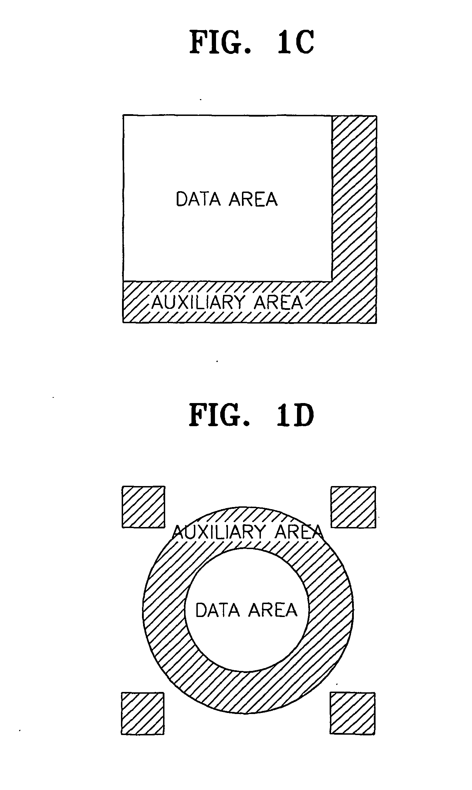

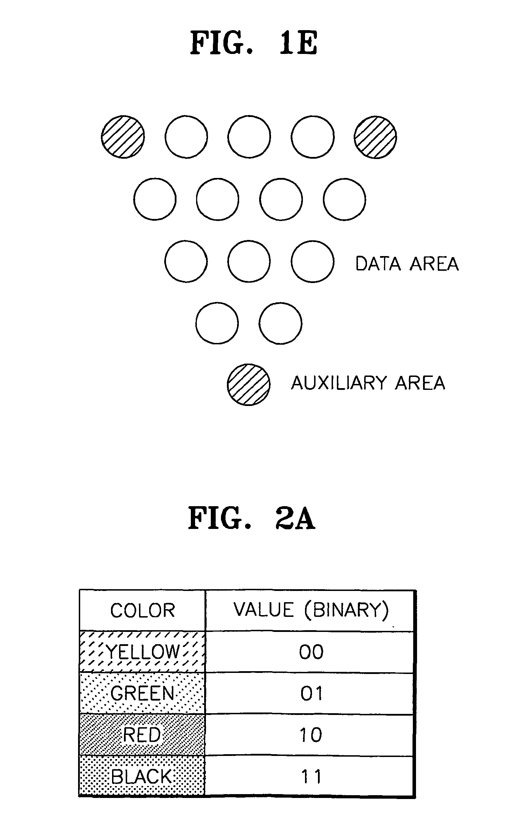

FIG. 1A shows an example of the structure of a code formed as an image so that target information can be read by machines, according to the present invention. Referring to FIG. 1, this code includes at least a data area having at least one cell. The code includes the data area 11 formed with at least one data cell which is encoded and expressed in different colors or shades depending on the content of information. Further, various shapes or patterns may be used for encoding information. Shapes of the cells may be are differently represented each other and patterns such as a line may be added within the cells.

The code can further include a parity area 13, a reference area 15 and/or a control area 17. The parity area 13 formed with parity cells for performing recognition error inspection with respect to the cells within the data area 11. The reference area 15 is formed with at least one reference cell which provides a reference color or reference shade for judging the color or shade of the data cell formed in the data area 11. The control area 17 is formed with at least one control cell which indicates a command or service capable of being provided using the information indicated in the data area 11. Hereinafter, one or more areas including the parity area, the reference area and the control area except the data area is referred to as "an auxiliary area" and a cell within the auxiliary area is referred to as "an auxiliary cell."

Preferably, the code further includes a boundary area for defining the areas between the areas included in the code. Also, a boundary area can be further included between the cells included in each of the regions, in order to define cells. The boundary area can be made up of a line or cell having a specific color or pattern, and a boundary line or boundary area can be black or white. The areas can also be distinguished from each other by a certain range of a color or shade differently set for the cells of each of the data area, the parity area, the reference area and the control area, or by inserting an individual specific pattern into the cells of each of the areas. Meanwhile, the boundary area may not be expressed in the code image for security of code information.

The data area 11 is made up of at least one data cell in which a character or the like is encoded into an image. A data cell can be configured so as to represent information such as a single character, or a set of data cells can be configured so as to represent one or more items of information. For example, a character A can be expressed as a single red cell or as two cells, for example, a red cell and a green cell.

Target information contained in the data area 11 is made up of characters, numerals and symbols, and can be a variety of information such as a name, an address, a telephone number, a facsimile number, the host address of a network, domain names and IP addresses used on the internet, a URL, a protocol, or a document name, depending on the need of users.

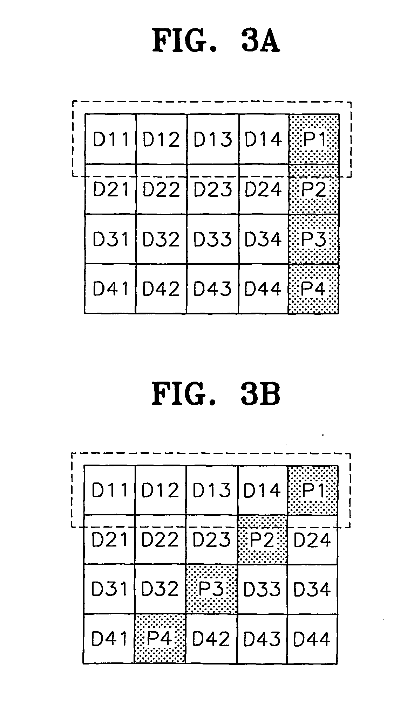

The parity area 13 is provided to be used upon decoding to determine whether colors or shades (and shape and/or pattern, if any) expressed in the cells are suitable for the content of target information. Parity data is obtained according to the code values corresponding to the colors or shades expressed in the data cells, and parity cells are formed by the colors or shades for the parity data. Various examples of the location of parity cells within a code image are shown in FIGS. 3A through 3F.

The reference area 15 is used to set a reference color (or a reference shade, if necessary, a reference shape or a reference pattern) for recognizing the colors (or shades, shape or pattern) expressed in the cells in the data area 11 and/or the control area 17. The colors of the cells expressed in each of the areas are based on at least one model of a red blue green (RGB) color model, a hue saturation value (HSV) color model and the like. Also, when a code is formed in a black and white shade (gray scale), the information of each cell can be accurately ascertained on the basis of black and/or white expressed in the reference area 15.

A color can be printed differently depending on the type of printer or the material used in the printing paper, and the same color can be recognized somewhat differently depending on the characteristics of a scanner or camera. In consideration with this fact, the reference cells in the reference area 15 provide a standard for determining a color expressed on the data area. That is, even when a color is differently printed due to the difference in characteristics between output devices, or when a color is differently recognized due to the difference in characteristics between input devices such as a scanner, the color of each of the cells in the data area 11 can be accurately recognized since the color difference between the reference area 15 and the data area 11 is fixed. Therefore, the color of each of the cells can be obtained by the comparison with the reference color of the reference area 15 on the basis of the RGB model or HSV model, so that the information of a data cell can be accurately recognized even if an image input device or an image output device is changed. When a code image is input by a camera, shapes or patterns in the code image may be distorted or tilted. Shapes or patterns expressed in the code image may be correctly discerned based on the reference shape or reference pattern provided in the reference area.

Users can receive various services depending on the type of application field using the target information of the data area 11. For example, if an Internet home page address (that is, a URL) is expressed as a code image on a business card, a program can be provided so that a code image is decoded by a computer, and then a web browser of the computer or a server computer connected to the computer is executed to allow users to be connected to the home page. Also, if an internet E-mail address is expressed as a code image on a business card, the code image is decoded by a computer, and then the mailing software of the computer is executed, to provide an environment where a mail can be sent to the E-mail address. In an another example, when the code image is input to a portable terminal such as a mobile phone, a phone call is made to a telephone number corresponding to the code image or a service for geographic information may be provided. Here, this automatic service function can be automatically executed by a separate program or by a decoding program depending on the type of target information. Also, a code image includes the control area 17 on which this command word is expressed as an image, so that the automatic service function can be executed by a decoding program using control information decoded by the control area 17.

The control area 17 can include a command or meta-data for controlling the target information of the data area. For example, the information expressed on the control area 17 can include various meta-data such as the sequence of decoding of the cells formed in the data area 11, the location of the reference cells of the reference area 15 that is a standard of judgement of the colors of the data cells formed on the data area 11, the location or properties of the parity area 13, and the like.

Fig 1B to 1 E are examples of expressing a data area and an auxiliary area in a code image. Here, the auxiliary area which is represent by hatched areas may include at least one area selected among a parity area, a reference area and a control area.

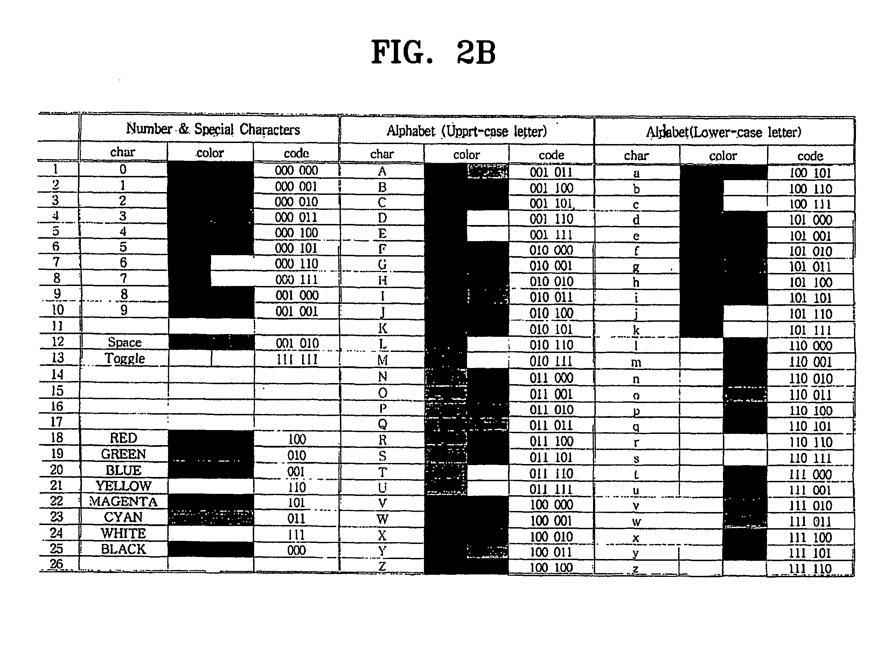

FIG. 2A shows an example of expressing data of two bits using four colors. If each cell can have one among four colors, 2-bit data can be expressed using one color cell. Hence, if 4 consecutive cells are defined to express one character, 2⁸, that is, 256 characters, can be expressed. If a cell may expressed by one of four types of shapes, for example, a small rectangular, a large rectangular, a small circle and a large circle, while one color is used, data of two bits can be encoded. In this case, information of 256 (8 bits) kinds can be expressed in a code image when a cell may be filled by one of four colors. FIG. 2B shows an example of a code conversion table where various characters (alphabet or special characters), numerals or figures are converted into color images. Here, one character is mapped to two color cells.

In an encoding method using the code conversion table of FIG. 2B, various characters or the like are converted into code values, and then code images are produced in colors respectively allocated to the code values. In FIG. 2B, a code image is produced using 8 colors, and two consecutive cells are used to express one character or numeral. Code values "000" to "111" are allocated to 8 colors, respectively, and each character is encoded in two colors. For example, a number "3" is allocated as a code value "000 011 ", and encoded in a color (black) allocated to the code value "000" and a color (cyan) allocated to the code value "011 ", so that the number"3" is expressed using two consecutive cells of black and cyan. Various characters or numerals included in the target information are converted into code values according to the code conversion table shown in FIG. 2B, and then colors corresponding to the code values can be expressed in a rectangular matrix, that is, a combination of rectangular cells.

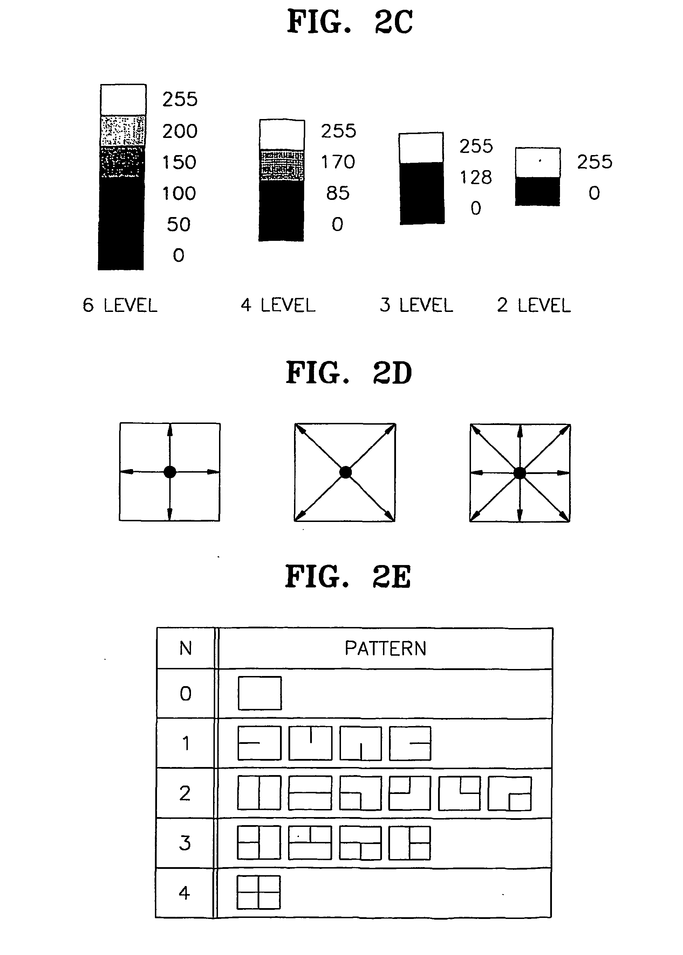

FIG. 2C shows an example of a code image produced using a greyscale code, according to the present invention. In the present invention, a character or numeral can be color-encoded and color-decoded using a color printer and a scanner. In FIG. 2C, a code image can be produced using a greyscale code, that is, shades ranging from black to white, depending on the purposes and circumstances of users.

A greyscale code forms a code according to the brightness of white from black instead of a mixture ratio of red, green and blue. Thus, the reference area is formed of at least one reference shade among black, white and grey, and the cells formed in the data area have code values obtained due to the grey difference between their shades (or colors) and the reference shade of the reference area. If there is no reference area, a shade of each cell in the code image is detected, cells (cell group) having similar shades each other within a predetermined criterion are grouped, and then the same code value is assigned to the cells included in the same group. Next, using a parity area it is determined whether there is a decoding error. If an error, shades of the cells may be recalculated or criteria for forming cell groups are reestablished, and then it is determined whether an error is still happened. This grey code image can usually be applied to black printing media such as newspaper.

FIGS. 2D and 2E show an example of a pattern that can be expressed in each of the cells of a code image. As can be seen from FIGS. 2D and 2E, a method of adding a pattern to a color cell using a vector line in addition to color can be adopted to convert information into a code image. FIG. 2D shows an example of 4-direction vector lines and 8-direction vector lines that can be expressed in a cell. If 4-direction vector lines are used, patterns of four bits, that is, 16 different patterns, can be added to the color of each cell, as shown in FIG. 2E. Accordingly, when one character is expressed for one cell, and 8 colors, that is, colors of 3 bits, are used, each cell can be expressed in 128 characters (characters of 7 bits). Also, a cell can be divided in horizontal, vertical and diagonal directions, and the divided cell pieces can be expressed in different colors or shades.

In a code image according to an embodiment of the present invention, a data area and/or an auxiliary area may be expressed by shapes and/or patterns as well as colors or shades. Also, a data area and/or an auxiliary area may be expressed by at least one of colors, shades, shapes or patterns, or a combination thereof. For example, information may be expressed by various shapes or patterns in a data area and/or an auxiliary area while using only one color.

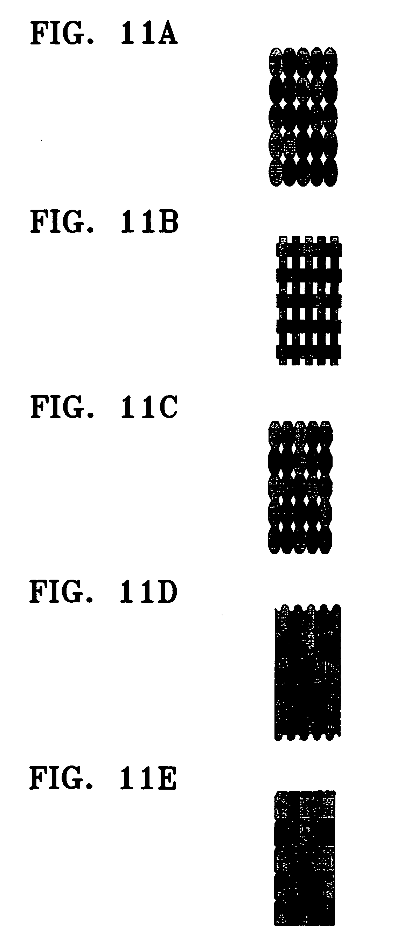

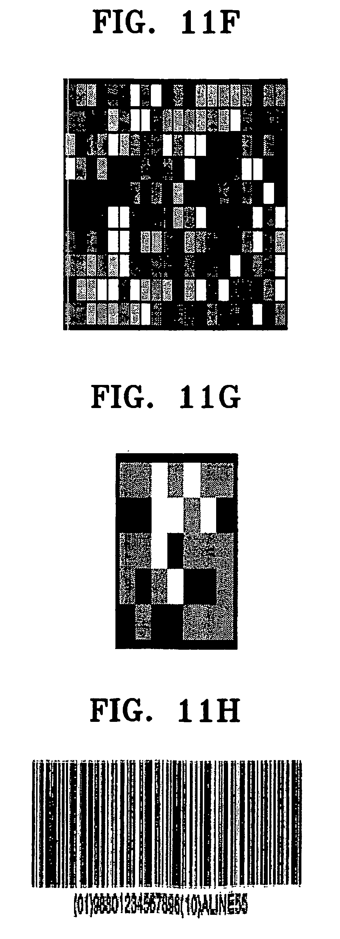

FIGS 11A though 11H show various examples of representing a code image according the present invention. A cell may be variously expressed by one shape of a rectangular, a circle, an ellipse, a cross or web and/or a combination thereof.
Size or shape of a code image or a cell included therein may be aptly selected according to contents or amounts of information to be expressed in the code image. FIG 11H shows that a shape similar to a bar code also may be used in an embodiment of the present invention.

FIGS. 3A through 3F show various examples of the location of the parity area 13 of FIG. 1 within a rectangular matrix-type code image. Also, the configuration of these examples can be modified and applied to a code image having a circular shape or another shape. Area (Dn) except for the parity area (Pn) is a data area, a reference area or a control area.

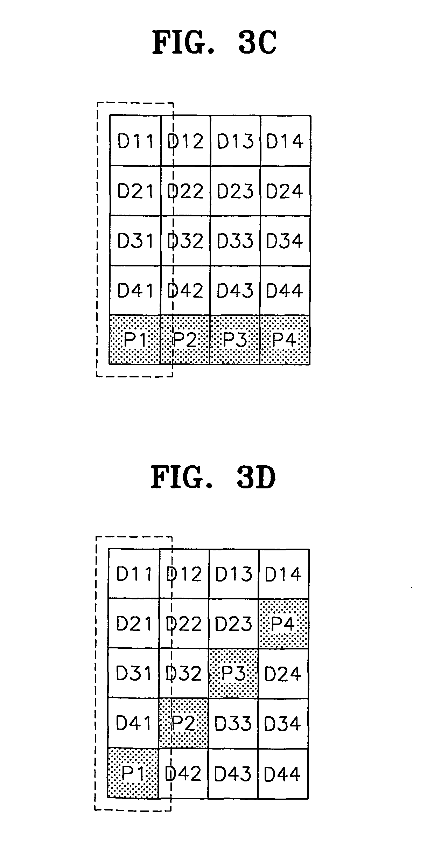

In FIG. 3A, parity cells each having parity information on the cells in the same row are located at the rightmost column. For example, the parity cell for cells D11, D12, D13 and D14 is P1. In FIG. 3B, parity cells each having parity information on the cells on the same row are aligned in a diagonal direction. In FIG. 3C, parity cells each having parity information on the cells on the same column are located at the lowermost row. In FIG. 3D, parity cells each having parity information on the cells on the same column are aligned in a diagonal direction. Codes shown in Figures 3A, 3B, 3C and 3D do not comprise part of the invention and are provided as background information only.

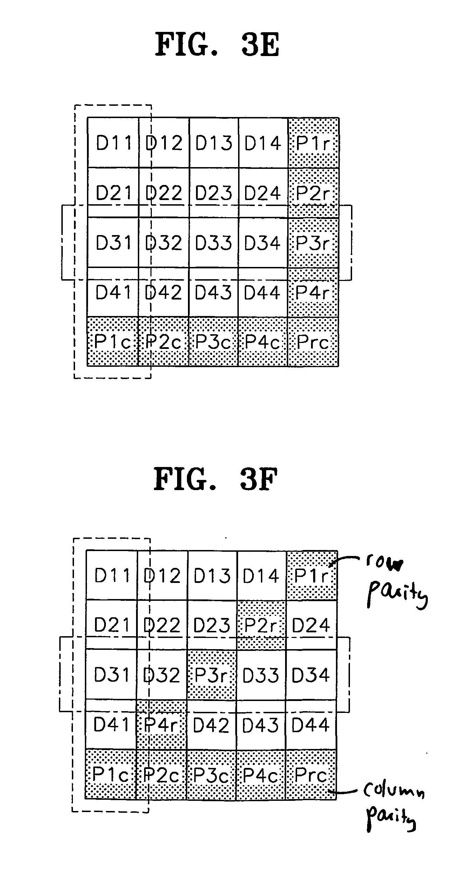

In FIG. 3E, parity cells P1r through P4r each having parity information on the cells in the same row are located at the rightmost column, and simultaneously, parity cells P1c through P4c each having parity information on the cells in the same column are aligned at the lowermost row. A parity cell Prc having parity information on the row parity cells and the column parity cells is further included. In FIG. 3F, a code includes the row parity cells P1 through P4r and the column parity cells Plc through P4c, as in FIG. 3E. Here, the row parity cells P1r through P4r are aligned in a diagonal direction. Conversely, the column parity cells P1c through P4c can be aligned diagonally.

An example of a method of selecting a color for a parity cell will now be described. A parity cell has a code value obtained by performing a XOR operation with respect to the code values of the data cells (undoubtedly, reference cells and/or control cells can be included) on the same row or column. Various methods for generating parity data may be applied for encoding a code image according to the number of colors or shades to be expressed in the code image. For example, when two kinds of colors or shades are used, two parity methods, that is, an even parity method and an odd parity method may be available. When an even parity method is used, the result value of the XOR operation is directly the code value of a parity cell, so that the parity cell is expressed in a color for the obtained code value. When an odd parity method is used, the complement value (-) of each bit of the resultant value of the XOR operation is obtained, and the parity cell is formed in a color corresponding to the obtained complement value.

A method of obtaining a color to be expressed in a parity cell using the code conversion table shown in FIG. 2A will now be described. If the colors of the data cells D11, D12, D13 and D14 are black, red, green and green, respectively, the code values of the data cells are 11, 10, 01 and 01, respectively. Here, "XOR" denotes an exclusive OR operation.

### < Even parity method >

11 XOR 10 XOR 01 XOR 01 = 01 (green)

### < Odd parity method >

11XOR 10 XOR 01 XOR 01 = 01 → ~01 =10 (red)

As the number of colors or shades used in a code image is increased, it is more flexible to select one among various parity methods. When four types of colors or shades are used, four parity methods comprising modular parity methods as well as an even and odd parity method are available. The modular parity methods includes an even modular parity method in which an even parity value obtained by the even parity method is added by two, the resultant value is divided by four and then the resultant value is set to a parity value and an odd modular parity method in which an odd parity value obtained by the odd parity method is added by two, the resultant value is divided by four and then the resultant value is set to a parity value. In case of eight colors or shades, eight types of parity methods are available. In general, if the number of colors or shades used in a code image is assumed to N, the number of parity methods may be determined as follows:
(an even parity value + 2* i) % N, or
(an odd parity value + 2 * i) % N
   where, i=0,1,2, ..., log₂N-1, N=2,4,8, ..., and % modular.

A plurality of parity methods is simultaneously applied to one code image and thus type of code, type of decoding or direction for reading cells may be determined according to types of parity methods or locations expressed in the code image. Referring to FIG. 3E, an even parity method is applied to each row and column, but an odd parity method may applied to a cell Prc. Referring to FIGS. 3A to 3C, an even parity method is applied to the first column, but an odd parity method may applied to the remaining columns. Meanwhile, a shape or a pattern may also be used to express a parity value instead of colors or shades. Further, a combination of colors, shades, shapes and/or pattern is also available. For example, when a parity value is zero, a white rectangular cell may be used or a black circle cell. A code image may further comprises a cell or an area in which information relating to a parity method applied to the code image is expressed.

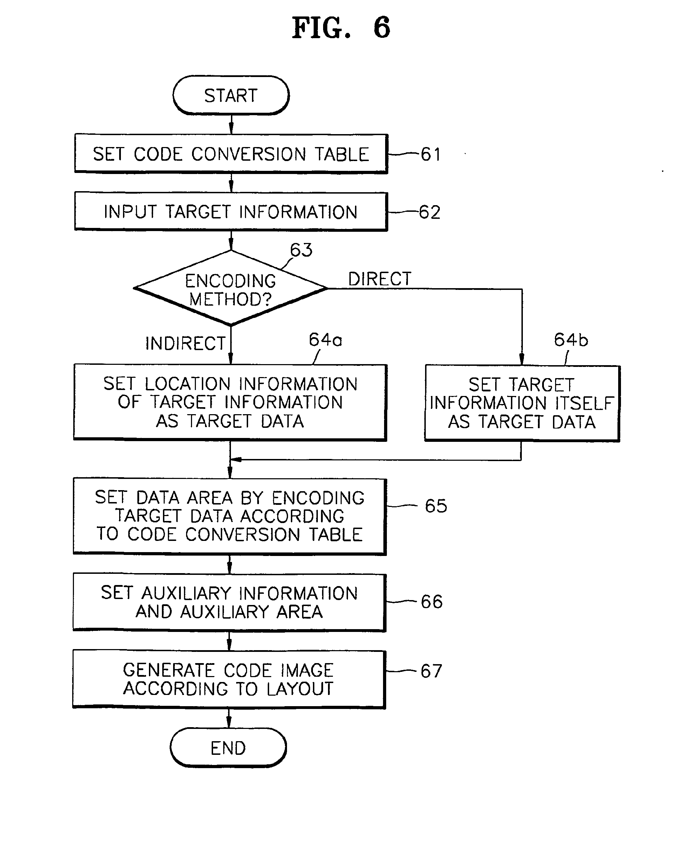

FIG. 6 is a flowchart illustrating a method of encoding information such as characters into a code image, according to an embodiment of the present invention. A method of converting information into a code image using encoding software will now be described. At least one character or numeral included in target information is converted into a code image formed of a predetermined shape, color or pattern or a combination of the above-described features using a predetermined code conversion table as shown in FIG. 2B.

An encoding method may be a direct encoding method, an indirect (or index) encoding method or a mixed encoding method depending on the type of information encoded into a code image. In a direct encoding method, target information itself is directly encoded using a code conversion table, thereby producing a code image. In an indirect encoding method, index information (for example, the address of a database or a record number) for reference of target information is encoded into an image using a code conversion table. The mixed encoding method is a mixture of the two above-described methods.

In the direct encoding method of encoding target information itself into a code image, a separate system or storage is not required. However, when the amount of data of target information increases, the physical size of the code image increases.

In the indirect encoding method, target information itself is not encoded, but information on the position of a storage medium is encoded. This position information can be the pointer or memory address of a storage medium in which target information is stored, or the URL or IP address representing the position of target information. Thus, the indirect encoding method requires a separate system or a storage medium in which target information exists.

In the mixed encoding method, some indispensable data among the entire target information is directly encoded, and the other data is indirectly encoded. For example, names and telephone numbers are encoded character by character, large data such as mail addresses or E-mail addresses is stored in a server, and the memory address of the data stored in the server is encoded to produce a code image. Also, it is preferable that fixed data such as names adopt the direct encoding method, and variable information capable of being changed at any time, such as, home page addresses, telephone numbers or E-mail addresses, is indirectly encoded. Even when the personal items of a user are changed, a person who has received a business card on which a code image of the user is expressed can always access the latest information even with the old business card if the user registers the changed items in the database of a server.

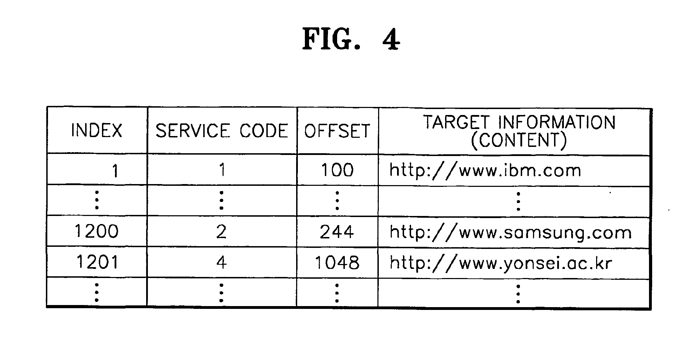

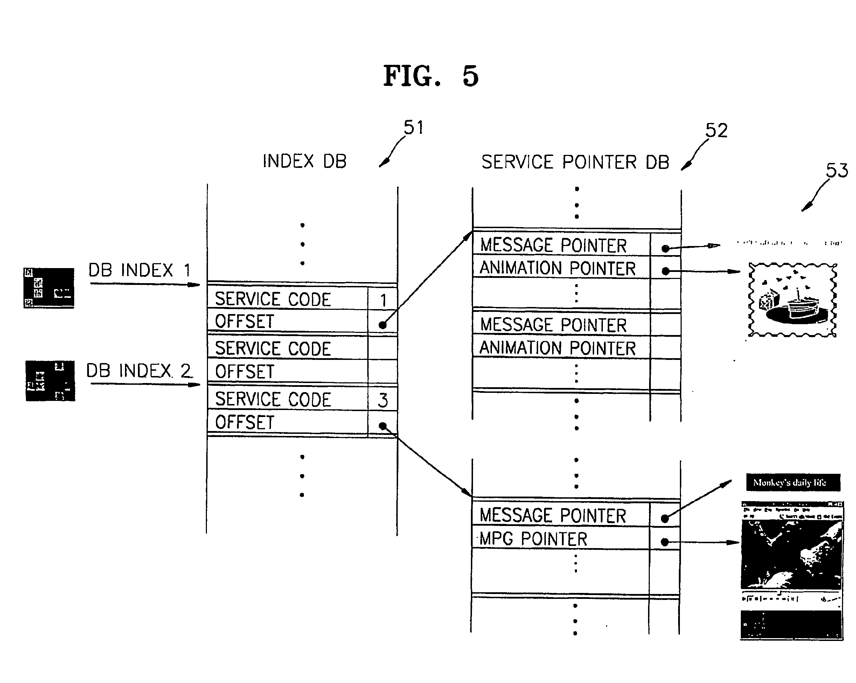

FIG. 4 shows the structure of a database which stores index information required when an indirect encoding method is applied to an encoding method according to the present invention. FIG. 5 illustrates a process for acquiring target information using index information read from a code image. In FIG. 5, a service pointer database 52 that stores pointer information capable of accessing real target information depending on index information is included together with an index database 51 as shown in FIG. 4. The pointer information indicates the position at which real target information 53 such as messages, images or moving pictures is stored.

A unique index is allocated to each real target information (content), and the service code and the offset, which correspond to target information, are set and stored together. Here, the target information, which is the final information capable of being eventually used by users, includes various types of information such as web site addresses, E-mail addresses, messages, images, moving pictures and music. A service code is designated depending on the type of service.

The offset relates to information on a position at which the service pointer database 52 can be accessed. For example, if index information is read from a code image, the index database 51 is searched to extract the service code, offset and target information for the index information. Pointer information stored in the service pointer database 52 is searched for depending on the offset. The position of preset messages or image files are found depending on the pointer information and the message or image is provided to users. For example, using a target data obtained by decoding a code image, a service type code is obtained from a first database and location information is obtained from a second database. Target information is obtained according to the location information, and then a service such as a message services, a moving image service, a web page access service, a telephone call service or an E-mail service which is determined by the service type code may be provided depending on the target information.

An encoding process will now be described referring to FIG. 6. A code conversion table on which colors or shades (or grey levels) are mapped corresponding to recognizable characters including numerals and symbols, is established, in step 61. An example of the code conversion table is shown in FIG. 2B, and a pattern (see FIG 2E) using a vector line can be used in the code conversion table.

A user inputs target information to be converted into a code image in step 62. Here, the user inputs his or her name, position, telephone number and facsimile number in order to encode for example, personal items to be expressed on a business card, into a code image. It is common that a server stores information input by users in a database or file

Next, it is determined whether to apply the direct encoding method of directly encoding target information or the indirect encoding method of indirectly encoding information on the position at which target information is stored in a data base, in step 63. If the direct encoding method is applied, the target information itself is set to be target data to be encoded, in step 64b. If the indirect encoding method is applied, the information on the position of the target information is set to be target data to be encoded, in step 64a. For example, if personal items (target information) themselves input by users are encoded, this corresponds to the direct encoding method. If database addresses at which the personal items are stored in a server, or indices associated with the addresses are encoded, this corresponds to the indirect encoding method. Also, a mixed encoding method, in which names are encoded by the direct encoding method and the other personal items are encoded by the indirect encoding method, can be applied.

The target data is encoded using a code conversion table, in step 65. Then, a code value for each of the characters or numerals included in the target data is obtained, a color or shade for each data cell is determined by the code value to form an image of each data cell, and imaged data cells are aligned in the order (or in a determined way) of alignment of characters or the like of target data, thereby completing a data area.

After the target data is encoded, parity information is selected and reference information and/or control information may be selected as an auxiliary information to be expressed in a code image in step 66. Further, a method of expressing the auxiliary information in the code image, for example, type of parity method, may be determined.

If reference information is expressed in an auxiliary area of a code image, a reference area .can be further set up by determining the shape, position or arrangement of reference cells in which a reference color or reference shade (and reference shape or reference pattern, if necessary) is to be expressed for providing a standard of interpretation of colors or shades expressed in the data cells of the data area. Also, a control area, in which control information where items associated with commands or services capable of being used using the target information included in the data area are set, can be further established.

Then, as parity information is expressed in an auxiliary area of a code image, a parity value is obtained from the code values of colors or shades (and shapes or patterns, if necessary) expressed in the data area or the like, and a color or shade for the parity value is set to be parity data, in step 66. At this time, an area in which the parity cell is to be located is determined (see FIG. 1 and FIGS. 3A through 3F).

When a data area and an auxiliary area are set up, the layout of a code image including the shape of the code image, the relative position and size of each of the areas, and the size of a cell unit is set. A code image made up of a data area and an auxiliary area is produced according to the set layout, in step 67. The code image can be automatically output by the algorithm of a program, or manufactured by a graphic editor or by a manual operation according to a code conversion scheme. The code image formed in this way is expressed on a predetermined medium or stored in an image file.

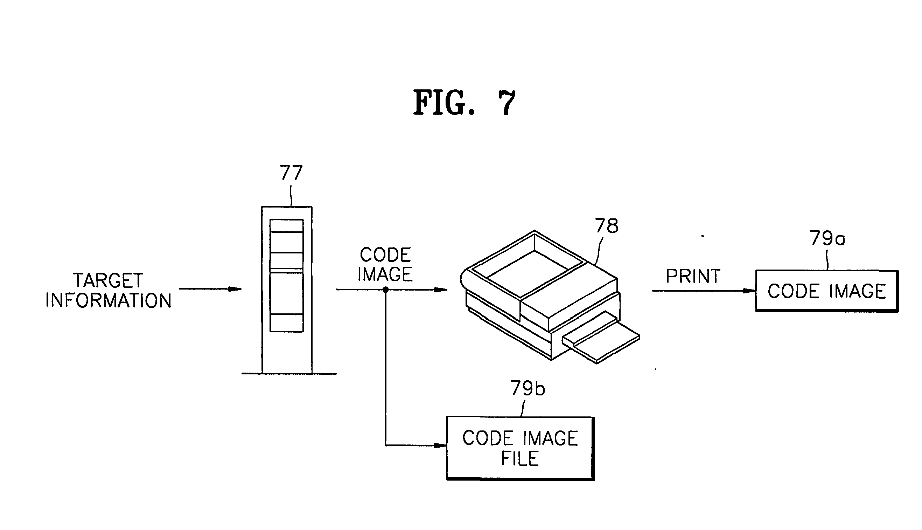

FIG. 7 shows an encoding system according to the present invention. In FIG. 7, a computer 77 receives target information, produces a code image through the above-described encoding process and prints the code image using a printer 78, so that the code image can be physically expressed on a medium 79a such as a business card or electronically provided in the form of a code image file 79b. Here, a medium on which a code image is expressed can be all media capable of expressing predetermined information, such as a business card, the exterior of products, the advertisement page of magazines and the like. Also, a code image can be output through a display device such as a monitor, stored in a computer file, or transmitted as an electrical signal to a communication line.

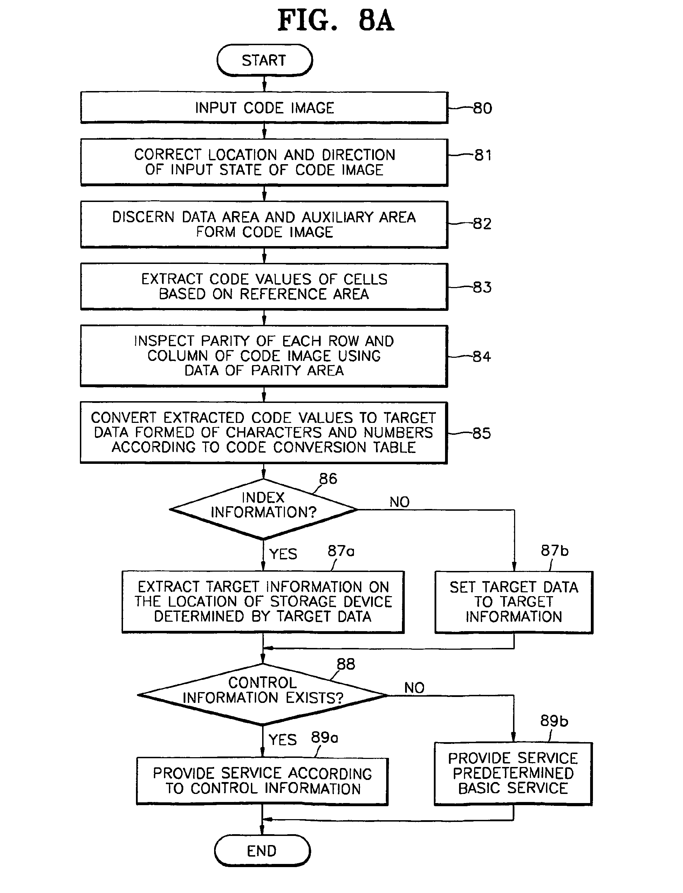

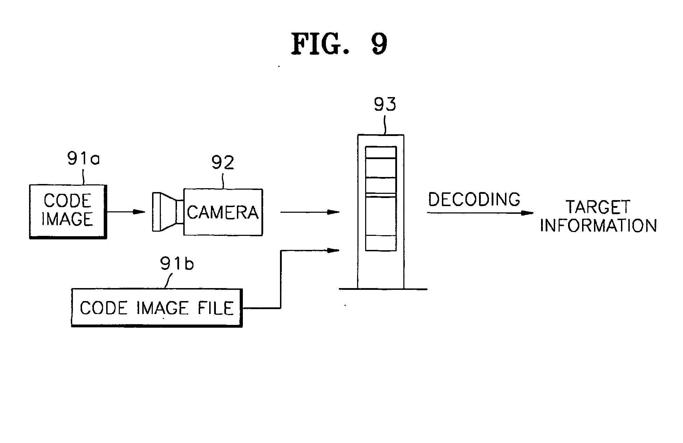

FIG. 8A is a flowchart illustrating a decoding method to extract the original target information made up of characters or the like from a code image, according to an embodiment of the present invention. In order to decode a code image of the present invention, an image input device 92 for reading a code image 91a, such as a scanner, a digital camera, a CCD camera, a sensor, a facsimile or the like, must be provided, or a code image must be provided in the form of a code image file 91b so as to be directly used by a computer 93, as shown in FIG. 9. Also, the computer 93 (a personal computer or a server computer connected to personal computers) must be able to execute a program for decoding code images.

Referring back to FIG. 8A, a code image made up of a data area and a parity area (including a reference area and a control area if they exist) is input to a user computer, in step 80. The user computer can directly receive the code image 91 a expressed on a medium using an image input device, or can load the image file 91 b, which has already been made, into its memory using a storage device such as a disc or buffer. In the case of a code image formed by an indirect encoding method, the user computer must be connected to a server having a storage device in which index information is stored, or must include such a storage device.

An image input by an image input device is processed by an edge detection method or a noise image rejection method using predetermined parameters, thereby eliminating a background image and thus obtaining a code image. Sometimes, a code image may be read crookedly or aslant depending on the operating state of a scanner or the position on a medium at which the code image is printed. In this case, the code image may be decoded wrongly. Accordingly, the position or direction of the code image is corrected, in step 81. Even when the correction step is not performed, locations and information of each cell may be detected concerning the state of an input image.

A data area and an auxiliary area (a parity area and preferably a reference area and/or a control area) in the code image are discerned from each other using the information in a boundary area set between areas or using particular information in a cell, in step 82. If the auxiliary area includes at least two sub areas, these sub areas are discerned from each other. If there is the reference area in the code image, colors, shades, shapes and/or patterns are discriminated depending on information of the reference area. As a parity area is provided in the code image, it is performed to detect a decoding error.

When a code image is recognized by a computer, a decoding process for extracting the original information from the code image is performed. Decoding denotes extraction of the original information from a code image according to what is defined in a code conversion table. Types of decoding methods include a direct decoding method and an indirect decoding method. In a direct decoding method, when a code image is decoded, actual target information such as names or addresses is directly extracted. In an indirect decoding method, a decoded result has index information, which is a key value for accessing a database in which actual target information such as names or addresses is stored.

Upon decoding, a process for finding shapes, colors, patterns and characters included in a code image is required, and a process for correcting distorted images is also required. Here, the colors can be discerned by at least one of an RGB (red, green, blue) model, an HSV (hue angle, saturation, value) model, a CMY (cyan, magenta, yellow) model and an HLS (hue angle, lightness, saturation) model.

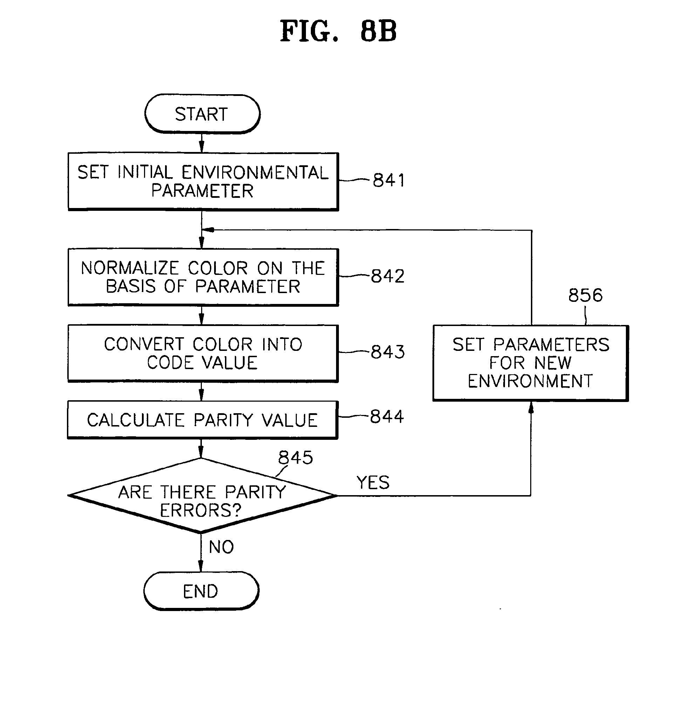

In order to achieve decoding, the code values of the cells within a data area and an auxiliary area are extracted, in step 83. If a reference area exists, a color (or shade, etc) is detected from a reference cell, and serves as a reference color (or reference shade) for interpreting the information in the data area or other areas. Colors are detected from the cells included in the data area, the parity area or the control area, and the color differences of the detected colors from the reference color are obtained and converted into the code values for the cells. If there is no reference area, the code values for the cells can be obtained depending on colors or shades interpreted by an image input device.
As a parity area is provided in the code image, the parity of each row or column of the code image is checked as to whether it has errors, using the code values obtained from the parity area, that is, parity data, in step 84. This step will be described later in greater detail referring to FIG. 8B. If necessary, direction or location of the code image may be also detected depending on the parity data.

The code value of each cell obtained through the above-described process is converted into target data made up of recognizable characters including numerals and symbols according to a code conversion table (see FIG. 2B), in step 85. The content of the target data obtained in step 85 is determined depending on the type of encoding method, in step 86. In step 87a, if a code image is encoded by the indirect encoding method, that is, if target data obtained by decoding is index data, target information stored at a position on a storage device (database) determined by the target data is extracted, since the target data corresponds to the address or pointer of a storage device in which target information is stored. If the target data is not index data, the target data serves as desired target information, in step 87b.

It is determined whether a code image includes a control area in which items associated with commands or services capable of being executed using target information are set forth, in step 88. If a code image includes the control area, commands or services are provided depending on information set forth in the control area, in step 89a. Otherwise, a basic service designated in a program is provided, in step 89b.

FIG. 8B is a flowchart illustrating the step 80 of FIG. 8A in greater detail. In FIG. 8B, parity is inspected on the basis of the code values extracted in step 84, and colors are corrected according to the result of the parity inspection.

First, parameters for color interpretation are set in step 841. The parameters can be R, G and B in the RGB model, H, S and V in the HSV model, or a combination of the aforementioned features, and are set to normalize the code values of colors or shades recognized from a code image in consideration of the environment from which the code image has been read. Here, the parameters can be R, V and S values, that is, the R value obtained by the RGB model and the V and S values obtained by the HSV model. Generally, initial environmental parameters are set so as to be suitable for the most-widely used illumination environment, such as, fluorescent lamps or 3-wavelength lamps. Preferably, the parameters are set depending on the illumination environment when a white background is photographed using an image input device, before a code image is input. For example, since red light is relatively strong under the illumination of a halogen lamp, parameters are set so as to remove an influence of red light from a halogen lamp. Then, an actually-read color is normalized by the parameters, thereby reducing the effect of illumination and obtaining a color which is close to the original color.

Next, the R, G and B values of a color read from a code image are normalized on the basis of the parameters R, V and S, in step 842. A code value for a color depending on the normalized R, G and B values is obtained using a code conversion table, in step 843. A parity value is calculated using the code value of the cells on each column and/or row expressed in a data area (including a reference area and a control area if they exist), in step 844. In step 845, the calculated parity value is compared with the parity data of a parity cell set in units of columns and rows of the data area, to determine whether there are parity errors. As a plurality of parity methods are applied to the code image, the order of decoding cells included in the code image may be also easily detected besides a parity check described in the above.

If a parity error is generated on a column or row, parameters for a new environment are set in step 846, and then the step returns to the color normalizing step 802. Parameters optimized to an illumination environment of high frequency, and their weighted values, are pre-set and stored in a decoding program or a database, so that users can select an environment parameter which is the most suitable for their environments. Generation of parity errors can be considered as generation of errors in color interpretation using the currently-set parameters. Accordingly, in this case, colors are again read using other parameters.

The parameters are experimentally set in a parameter database so that a code image is distinguished from a background in an input image and a color read by an input optical device is corrected to the original color by analyzing the optical characteristics of the input optical device and its peripheral illumination circumstances. Thus, the effects of devices or an environment are excluded, so that colors can be recognized without errors. Two or more parameter groups each having other objective may be established. One may be a parameter group for distinguishing a code image from a background image and the other may be a parameter group for discerning colors or shades of the code image. For example, when colors are discerned on the basis of the RGB model under a red illumination environment, an R value is relatively high. Thus, the effects of environments can be excluded by reducing the R value read by an optical device depending on a predetermined weighted value. In a case of a code image received under a bright illumination environment, black and white are discerned from each other on the basis of the HSV model by increasing the weighted value of a V value. In a case of a code image received under a dark illumination environment, colors are determined on the basis of the HSV model by increasing the weighted value of the V value which is used for discerning black and white from other colors and by increasing the weighted value of the S value.

Upon re-setting parameters, the distribution of R, G, B, H, S and/or V values obtained with respect to each of the cells of a code image by an optical device is ascertained, and parameters and their weighted values can be re-set with reference to the distribution.

Meanwhile, when errors of reading data from a code image during decoding process continuously occur, a user may directly enter target data according to colors and so on expressed in the code image referring to a code conversion table and then a predetermined service may be provided to the user.

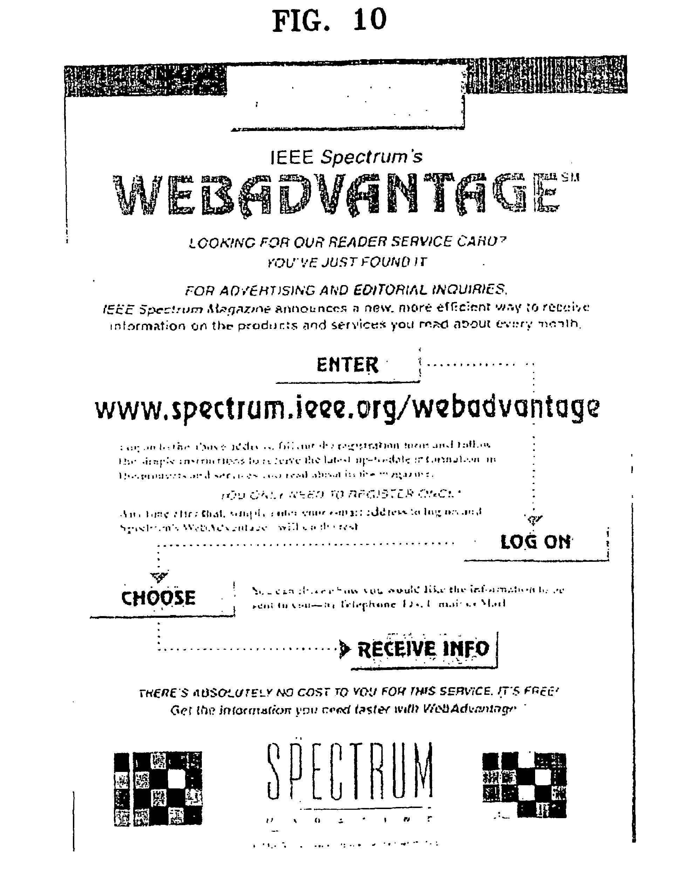

FIG. 10 shows an example of an advertisement paper on which a code image is printed according to the present invention. Users who see the advertisement paper of FIG. 10 can obtain information on a code image by scanning (or photographing) the code image (a rectangular matrix-type image displayed on the lower portion at the left and right sides of the advertisement paper) using an optical device such as a PC camera or a scanner.

In the present invention, a computer-readable code image can be stored in recording media that can be read by a computer. The computer-readable recording media may be any type of recording device that can be read by a computer system, such as, ROM, RAM, CD-ROM, magnetic tapes, floppy discs, optical data storage devices, and carrier waves (e.g., transmissions over the internet). Also, the computer readable recording media can be distributed on computer systems connected through a network and can store and execute a computer readable code in a distributed mode.

As described above, various types of information can be expressed in a code image using colors, shades, shapes and/or pattens according to the present invention. The code system according to the present invention enables to encode more diversified and voluminous information compared to the other codes of the prior arts. Further, as a code image according to the present invention includes a parity area for parity inspection, mal-recognition of colors due to the difference between input devices such as cameras or between the environments such as illumination conditions, can be easily detected and corrected. Thus, a more efficient decoding method and apparatus can be achieved using a code image according to the present invention.

### Industrial Applicability

According to an embodiment of the present invention, parity information together with target information is encoded into a code image according to a code conversion table, parity inspection is performed when the encoded code image is decoded, and environmental parameters are appropriately applied upon generation of parity errors, so that colors can be accurately recognized. In particular, even in an environment having normal brightness under a general fluorescent lamp, in a relatively dark or bright environment, and in an environment where red light is strong such as an environment under a halogen lamp, information on a code can be accurately recognized. Also, when the code may include a reference area, the code reduces mis-recognition due to differences among operational conditions or machine models of output apparatuses or input apparatuses.

## Claims

1. A method of encoding a code image, comprising:
(a) setting up a code conversion table in which different colors are mapped according to recognizable characters including numerals and symbols;
(b) setting target data to be encoded;
(c) encoding the target data using the code conversion table and forming a data area (11) with an image formed in a plurality of different colors, the data area being made up of at least one data cell;
(d) setting up a parity area (13) for determining whether the image formed in the data area (11) is suitable for the target data; and
(e) obtaining a physical or electronic code image (79a, 79b) from the image for the data area (11) and the parity area (13), wherein the physical or electronic code image (79a, 79b) is to be provided on a background area, the plurality of different colors of the data area (11) distinguishing the data area (11) from the background area;
**characterised in that**:
the parity area (13) includes a first parity area and a second parity area, each of which is made up of at least one parity cell which is formed by a colour determined by parity data obtained from a code value of at least one corresponding data cell, wherein a parity method applied to the first parity area is different to that applied to the second parity area, and wherein each of the first and second parity areas alone can be used to determine whether colors expressed in the data cells have been properly expressed depending on the target data.

2. A method as claimed in claim 1, wherein the step (d) comprises:
obtaining a code value set for the colors expressed in each of the data cells of the data area (11);
obtaining parity code values on the basis of the code values of the data cells; and
obtaining colors for the parity code values and expressing the parity cells of the parity area (13) in the colors.

3. A method as claimed in claim 1, wherein the target data is actual target information or position information associated with a position on a storage place where the actual target information is stored.

4. A computer program product comprising a set of instructions adapted to perform the steps as defined in claim 1 when said computer program is run on a computer.

5. A method as claimed in claim 1, further comprising the step of:
setting a reference area (15) in which base colors for providing interpretation bases for colors expressed in the data area (11) are provided.

6. A code image encoding device comprising:
a storage unit for storing a code conversion table in which different colors are mapped according to recognizable characters including numerals and symbols;
a data area formation unit for receiving target data to be encoded and encoding the target data using the code conversion table to form an image to be expressed on a data area (11), the data area being made up of at least one data cell and being formed of a plurality of different colors;
a parity area formation unit for forming a parity area (13) for determining whether the image formed in the data area (11) is suitable for the target data upon decoding; and
a code image formation unit for forming a physical or electronic code image (79a, 79b) from the image formed on the data area (11) and the parity area (13), wherein the code image formation unit is arranged to form the physical or electronic code image (79a, 79b) on a background area the plurality of different colors of the data area (11) distinguishing the data area (11) from the background area;
**characterised in that**:
the parity area (13) includes a first parity area and a second parity area, each of which is made up of at least one parity cell which is formed by a colour determined by parity data obtained from a code value of at least one corresponding data cell, wherein a parity method applied to the first parity area is different to that applied to the second parity area, and wherein each of the first and second parity areas alone can be used to determine whether colors expressed in the data cells have been properly expressed depending on the target data.

7. A device as claimed in claim 6, further comprising:
a reference area generating unit for setting a reference area (15) in which base colors for providing interpretation bases of colors be expressed in the data area (11) are provided.

8. A code image decoding method comprising:
(a) receiving a code image including a data area (11) in which target data is encoded and expressed as an image, the data area (11) being made up of at least one cell and being formed of a plurality of different colors, and a parity area (13) for determining whether the image formed in the data area (11) is suitable for the target data, the data area (11) being provided on a background area, the plurality of different colors of the data area (11) distinguishing the data area (11) from the background area;
(b) discerning the data area (11) and the parity area (13) in the code image from each other and from the background area;
(c) recognizing colors from the images expressed in the data area (11) and the parity area (13);
(d) determining if there are any parity errors by calculating a parity value using the colors recognized from the image in the data area (11), calculating a parity value using the colors recognized from the image in the parity area (13), and comparing the parity value of the parity area with the parity value of the data area; and
(e) decoding the encoded image using the colors recognized from the data area (11) and extracting target data made up of recognizable characters including numerals and symbols, if it is determined that there are no parity errors;
**characterised in that**:
the parity area (13) includes a first parity area and a second parity area, each of which is made up of at least one parity cell which is formed by a colour determined by parity data obtained from a code value of at least one corresponding data cell, wherein a parity method applied to the first parity area is different to that applied to the second parity area, wherein each of the first and second parity areas alone can be used to determine whether colors expressed in the data cells have been properly expressed depending on the target data; and
the step (d) includes:
(d1) calculating two parity values using the colors recognized from the cells in the data area (11) which were used to form the first parity area and the second parity area, according to each parity method applied thereto, respectively,
(d2) calculating two parity values using the colors recognized from the cells in the first parity area and the second parity area, according to each parity method applied thereto, respectively, and
(d3) comparing the two parity values obtained from the data area (11) with the two parity values obtained from the parity area (13), respectively, to determine if there are any parity errors.

9. A computer program product comprising a set of instructions adapted to perform the steps as defined in claim 8 when said computer program is run on a computer.

10. A method as claimed in claim 8, wherein, before step (d) is performed, parameters are set for normalizing the colors, recognized from the code image in consideration of an environment where the code image has been read and the colors recognized from the code image are normalised on the basis of the parameters; and
if parity errors are generated in step (e), the parameters are reset and the above-described steps are repeated.

11. A method as claimed in claim 10, wherein the parameters are set depending on the illumination environment when a white background is photographed using an image input device, before a code image is received.

12. A method as claimed in claim 11, wherein optimized parameters are preset and stored according to various illumination environments, and a user selects a parameter that is the most suitable for his or her environment.

13. A method as claimed in claim 11, wherein when the parameters are reset, the distribution of colors or shades obtained from the cells of a code image is ascertained, and the parameters and their weighted values are reset with reference to the ascertained distribution.

14. A method as claimed in claim 8, comprising the steps of:
receiving a code image having a data area (11) in which target data is encoded with colors into an image, and a reference area (15) in which base colors are expressed for providing interpretation bases of colors expressed in the data area (11); and
determining the color of each cell expressed in the data area (11) based on the reference area.

15. A method as claimed in claim 8, wherein when a control information, in which commands or services that can be used using the target data are set, is further included in the code image, providing commands or services according to the control information is further included.

16. A code image decoding device comprising:
a storage unit for storing a code conversion table on which different colors are mapped according to recognizable characters including numerals and symbols;
an input unit for receiving a code image (91a, 91 b) including a data area (11) in which target data is encoded and expressed as an image, the data area (11) being made up of at least one cell and being formed of a plurality of different colors, and a parity area (13) for determining whether the image formed in the data area (11) is suitable for the target data, the data area (11) being provided on a background area, the plurality of different colors of the data area (11) distinguishing the data area (11) from the background area;
an information discerning unit for distinguishing between a data area (11) and a parity area (13) and a background area of the code image and discriminating between and determining the colors of the cells expressed in the data area (11) and the parity area (13);
a parity comparison unit for determining if there are any parity errors by calculating a parity value depending on the colors recognized from the image of the data area (11), calculating a parity value depending on the colors recognized from the image of the parity area (13), and comparing the parity value of the parity area with the parity value of the data area; and
a data extraction unit for extracting target data made up of recognizable characters including numerals and symbols by decoding the received code image depending on the colors recognized from the data area (11) according to the code conversion table, if it is determined from the comparison by the parity comparison unit that there are no parity errors;
**characterised in that**:
the parity area (13) includes a first parity area and a second parity area, each of which is made up of at least one parity cell which is formed by a colour determined by parity data obtained from a code value of at least one corresponding data cell, wherein a parity method applied to the first parity area is different to that applied to the second parity area, wherein each of the first and second parity areas alone can be used to determine whether colors expressed in the data cells have been properly expressed depending on the target data; and
the parity comparison unit calculates two parity values using the colors recognized from the cells in the data area (11) which were used to form the first parity area and the second parity area, according to each parity method applied thereto, respectively, calculates two second parity values using the colors recognized from the cells in the first parity area and the second parity area, according to each parity method applied thereto, respectively, and compares the two parity values obtained from the data area (11) with the two parity values obtained from the parity area (13), respectively, to determine if there are any parity errors.

17. A device as claimed in claim 16, wherein the input unit receives a code image further including a reference area (15) which provides interpretation bases for the data area (11); and
the information discerning unit determines colors of each cell expressed in the data area (11) based on the reference area.

## Patentansprüche

1. Verfahren zum Codieren eines Codebildes, das beinhaltet:
(a) Einrichten einer Codekonvertierungstabelle, in welcher unterschiedliche Farben entsprechend erkennbarer Zeichen, darunter Ziffern und Symbole, gemapped bzw. zugeordnet werden;
(b) Festlegen von zu codierenden Zieldaten;
(c) Codieren der Zieldaten unter Verwendung der Codekonvertierungstabelle und Bilden eines Datenbereichs (11) mit einem in einer Anzahl unterschiedlicher Farben gebildeten Bild, wobei der Datenbereich aus wenigstens einer Datenzelle erstellt ist bzw. wird;
(d) Einrichten eines Paritätsbereichs (13), um zu bestimmen, ob das in dem Datenbereich (11) gebildete Bild geeignet für die Zieldaten ist; und
(e) Erhalten eines physikalischen oder elektronischen Codebildes (79a, 79b) aus dem Bild für den Datenbereich (11) und den bzw. dem Paritätsbereich (13), wobei das physikalische oder elektronische Codebild (79a, 79b) auf einem Hintergrundbereich bereitzustellen ist, wobei die Anzahl unterschiedlicher Farben des Datenbereichs (11) den Datenbereich (11) von dem Hintergrundbereich unterscheiden;
**dadurch gekennzeichnet, dass**:
der Paritätsbereich (13) einen ersten Paritätsbereich und einen zweiten Paritätsbereich beinhaltet, von denen jeder aus wenigstens einer Paritätszelle erstellt ist, die durch eine durch Paritätsdaten bestimmte Farbe, die aus einem Codewert wenigstens einer entsprechenden Datenzelle erhalten wurde, gebildet ist, wobei ein Paritätsverfahren, das auf den ersten Paritätsbereich angewandt wird, unterschiedlich zu jenem ist, das auf den zweiten Paritätsbereich angewandt wird, und wobei sowohl der erste als auch der zweite Paritätsbereich für sich dafür verwendet werden können, um zu bestimmen, ob in den Datenzellen ausgedrückte Farben in Abhängigkeit von den Zieldaten korrekt ausgedrückt wurden.

2. Verfahren nach Anspruch 1, wobei der Schritt (d) beinhaltet:
Erhalten eines Codewertsatzes für die in jeder der Datenzellen des Datenbereichs (11) ausgedrückten Farben;
Erhalten von Paritäts-Codewerten auf der Grundlage der Codewerte der Datenzellen; und
Erhalten von Farben für die Paritäts-Codewerte und Ausdrücken der Paritätszellen des Paritätsbereichs (13) in den Farben.

3. Verfahren nach Anspruch 1, wobei die Zieldaten tatsächliche Zielinformationen oder Positionsinformationen, die einer Position auf einem Speicherort, wo die tatsächliche Zielinformationen gespeichert sind, zugeordnet sind, darstellen.

4. Computerprogrammprodukt mit einem Satz von Anweisungen, das bzw. die dafür eingerichtet ist bzw. sind, die Schritte nach Anspruch 1 auszuführen, wenn das Computerprogramm auf einem Computer ausgeführt wird.

5. Verfahren nach Anspruch 1, das ferner den Schritt beinhaltet:
Einstellen eines Referenzbereichs (15), in dem Grundfarben zur Bereitstellung von Interpretationsgrundlagen für in dem Datenbereich (11) ausgedrückte Farben bereitgestellt sind.

6. Codebildcodiervorrichtung mit:
einer Speichereinheit zum Speichern einer Codekonvertierungstabelle, in welcher unterschiedliche Farben entsprechend erkennbarer Zeichen, darunter Ziffern und Symbole, gemapped bzw. zugeordnet werden;
einer Datenbereichs-Bildungseinheit zum Empfangen von zu codierenden Zieldaten und zum Codieren der Zieldaten unter Verwendung der Codekonvertierungstabelle zum Bilden eines auf einem Datenbereich (11) auszudrückenden Bildes, wobei der Datenbereich aus wenigstens einer Datenzelle erstellt und aus einer Anzahl unterschiedlicher Farben gebildet ist;
einer Paritätsbereichs-Bildungseinheit zum Bilden eines Paritätsbereichs (13), um zu bestimmen, ob das in dem Datenbereich (11) gebildete Bild geeignet für die Zieldaten nach der Decodierung ist; und
einer Codebilderzeugungseinheit zum Bilden eines physikalischen oder elektronischen Codebildes (79a, 79b) aus dem auf dem Datenbereich (11) und dem Paritätsbereich (13) gebildeten Bild, wobei die Codebilderzeugungseinheit
dafür eingerichtet ist, das physikalische oder elektronische Codebild (79a, 79b) auf einem Hintergrundbereich zu bilden, wobei die Anzahl unterschiedlicher Farben des Datenbereichs (11) den Datenbereich (11) von dem Hitengrundbereich unterscheiden;
**dadurch gekennzeichnet, dass**:
der Paritätsbereich (13) einen ersten Paritätsbereich und einen zweiten Paritätsbereich beinhaltet, von dem jeder aus wenigstens einer Paritätszelle erstellt ist, die durch eine Farbe gebildet ist, die durch Paritätsdaten bestimmt ist, die aus einem Codewert wenigstens einer entsprechenden Datenzelle erhalten wurden, wobei ein Paritätsverfahren, das auf einen ersten Paritätsbereich angewandt wird, unterschiedlich zu jenem ist, das auf den zweiten Paritätsbereich angewandt wird, und wobei sowohl der erste als auch der zweite Paritätsbereich für sich dafür verwendet werden können, um zu bestimmen, ob in den Datenzellen ausgedrückte Farben in Abhängigkeit von den Zieldaten korrekt ausgedrückt wurden.

7. Vorrichtung nach Anspruch 6, die ferner aufweist:
eine Referenzbereichserzeugungseinheit zum Festlegen eines Referenzbereichs (15), in dem Grundfarben zur Bereitstellung von Interpretationsgrundlagen von in dem Datenbereich (11) auszudrückenden Farben bereitgestellt werden.

8. Codebilddecodierungsverfahren, das beinhaltet:
(a) Erhalten eines Codebildes mit einem Datenbereich (11), in dem Zieldaten als ein Bild codiert und ausgedrückt sind, wobei der Datenbereich (11) aus wenigstens einer Zelle erstellt und aus einer Anzahl unterschiedlicher Farben gebildet ist, und einem Paritätsbereich (13), um zu bestimmen, ob das in dem Datenbereich (11) gebildete Bild geeignet für die Zieldaten ist, wobei der Datenbereich (11) auf einem Hintergrundbereich bereitgestellt wird, wobei die Anzahl unterschiedlicher Farben des Datenbereichs (11) den Datenbereich (11) von dem Hintergrundbereich unterscheiden;
(b) Unterscheiden des Datenbereichs (11) und des Paritätsbereichs (13) in dem Codebild voneinander und von dem Hintergrundbereich;
(c) Erkennen von Farben aus den in dem Datenbereich (11) und dem Paritätsbereich (13) ausgedrückten Bildern;
(d) Bestimmen, ob irgendwelche Paritätsfehler existieren, durch Berechnen eines Paritätswertes unter Verwendung der aus dem Bild in dem Datenbereich (11) erkannten Farben, Berechnen eines Paritätswertes unter Verwendung der aus dem Bild in dem Paritätsbereich (13) erkannten Farben, und Vergleichen der Paritätswerte des Paritätsbereichs mit den Paritätswerten des Datenbereichs; und
(e) Decodieren des codierten Bildes unter Verwendung der aus dem Datenbereich (11) erkannten Farben und Extrahieren von aus erkennbaren Zeichen, darunter Ziffern und Symbole, erstellten Zieldaten, wenn bestimmt wird, dass keine Paritätsfehler existieren;
**dadurch gekennzeichnet, dass**:
der Paritätsbereich (13) einen ersten Paritätsbereich und einen zweiten Paritätsbereich beinhaltet, von denen jeder aus wenigstens einer Paritätszelle erstellt ist, die aus einer durch die Paritätsdaten bestimmten Farbe gebildet
ist, die aus einem Codewert wenigstens einer entsprechenden Datenzelle erhalten wurde, wobei ein Paritätsverfahren, das auf den ersten Paritätsbereich angewandt wird, unterschiedlich zu jenem ist, das auf den zweiten Paritätsbereich angewandt wird, wobei sowohl der erste als auch der zweite Paritätsbereich für sich dafür verwendet werden können, um zu bestimmen, ob Farben, die in den Datenzellen ausgedrückt werden, in Abhängigkeit von den Zieldaten korrekt ausgedrückt wurden; und wobei der Schritt (d) beinhaltet:
(d1) Berechnen von zwei Paritätswerten unter Verwendung der aus den Zellen in dem Datenbereich (11) erkannten Farben, die verwendet worden waren, den ersten Paritätsbereich und den zweiten Paritätsbereich zu bilden, entsprechend jedem Paritätsverfahren, das hierauf jeweils angewandt wurde,
(d2) Berechnen zweier Paritätswerte unter Verwendung der aus den Zellen in den ersten Paritätsbereich und dem zweiten Paritätsbereich erkannten Farben, entsprechend jedem hierauf jeweils angewandten Paritätsverfahren, und
(d3) Vergleichen der zwei Paritätswerte, die aus dem Datenbereich (11) erhalten wurde, mit den zwei Paritätswerten, die aus dem Paritätsbereich (13) jeweils erhalten wurden, um zu bestimmen, ob irgendwelche Paritätsfehler existieren.

9. Computerprogrammprodukt mit einem Satz von Anweisungen, das bzw. die dafür eingerichtet ist bzw. sind, die Schritte nach Anspruch 8 auszuführen, wenn das Computerprogramm auf einen Computer ausgeführt wird.

10. Verfahren nach Anspruch 8, bei dem, bevor Schritt (d) ausgeführt wird, Parameter zum Normalisieren der Farben festgelegt werden, die aus dem Codebild unter Berücksichtigung einer Umgebung erkannt wurden, in der das Codebild gelesen wurde bzw. worden war, und die aus dem Codebild erkannten Farben auf der Grundlage der Parameter normalisiert werden; und
wenn Paritätsfehler in Schritt (e) erzeugt wurden bzw. werden, die Parameter zurückgesetzt und die zuvor beschriebenen Schritte wiederholt werden.

11. Verfahren nach Anspruch 10, bei dem die Parameter in Abhängigkeit von der Beleuchtungsumgebung festgelegt werden, wenn ein weißer Hintergrund unter Verwendung einer Bildeingabevorrichtung fotografiert wird, bevor ein Codebild empfangen wird.

12. Verfahren nach Anspruch 11, bei dem optimierte Parameter entsprechend unterschiedlicher Beleuchtungsumgebungen voreingestellt und gespeichert werden, und ein(e) Benutzer(in) einen Parameter auswählt, der am geeignetsten für seine oder ihre Umgebung ist.

13. Verfahren nach Anspruch 11, bei dem, wenn die Parameter zurückgesetzt werden, die Verteilung von Farben oder Tonwerten bzw. Schatten, die aus den Zellen eines Codebilds erhalten wurde, sichergestellt wird, und die Parameter und ihre gewichteten Werte unter Bezugnahme auf die sichergestellte Verteilung zurückgesetzt werden.

14. Verfahren nach Anspruch 8, das die Schritte beinhaltet:
Empfangen eines Codebilds mit einem Datenbereich (11), in welchem Zieldaten mit Farben in ein Bild kodiert wurden, und einem Referenzbereich (15), in dem Grundfarben zur Bereitstellung von Interpretationsgrundlagen von in dem Datenbereich (11) ausgedrückten Farben ausgedrückt werden; und
Bestimmen der Farbe jeder in dem Datenbereich (11) ausgedrückten Zelle auf Grundlage des Referenzbereichs.

15. Verfahren nach Anspruch 8, bei dem, wenn Steuerinformationen, in der Kommandos oder Dienste, die unter Verwendung der Zieldaten verwendet werden können, festgelegt sind, ferner in dem Codebild beinhaltet sind, das Bereitstellen von Kommandos oder Diensten entsprechend der Steuerinformation ferner beinhaltet ist.

16. Codebilddecodierungsvorrichtung mit:
einer Speichereinheit zum Speichern einer Codekonvertierungstabelle, auf welcher unterschiedliche Farben entsprechend erkennbarer Zeichen, darunter Ziffern und Symbole, gemapped bzw. zugeordnet sind;
einer Eingabeeinheit zum Empfangen eines Codebilds (91a, 91b) mit einem Datenbereich (11), in dem Zieldaten als ein Bild codiert und ausgedrückt sind, wobei der Datenbereich (11) aus wenigstens einer Zelle erstellt und aus einer Anzahl unterschiedlichen Farben gebildet ist, und einem Paritätsbereich (13), um zu bestimmen, ob das in dem Datenbereich (11) gebildete Bild geeignet für die Zieldaten ist, wobei der Datenbereich (11) auf einem Hintergrundbereich bereitgestellt ist, wobei die Anzahl unterschiedlicher Farben des Datenbereichs (11) den Datenbereich (11) von dem Hintergrundbereich unterscheiden;
einer Informationsunterscheidungseinheit zum Unterscheiden zwischen einem Datenbereich (11) und einem Paritätsbereich (13) und einem Hintergrundbereich des Codebilds, und zum Unterscheiden zwischen den und zum Bestimmen der Farben der in dem Datenbereich (11) und dem Paritätsbereich (13) ausgedrückten Zellen;
einer Paritätsvergleichseinheit, um zu bestimmen, ob irgendwelche Paritätsfehler existieren, indem ein Paritätswert in Abhängigkeit von den aus dem Bild des Datenbereichs (11) erkannten Farben berechnet wird, einen Paritätswert in Abhängigkeit von den aus dem Bild des Paritätsbereichs (13) erkannten Farben zu berechnen, und den Paritätswert des Paritätsbereichs mit dem Paritätswert des Datenbereichs zu vergleichen; und
einer Datenextraktionseinheit zum Extrahieren von Zieldaten, die aus erkennbaren Zeichen, darunter Ziffern und Symbole, erstellt sind, indem das empfangene Codebild in Abhängigkeit von den aus dem Datenbereich (11) entsprechender Codekonvertierungstabelle erkannten Farben decodiert wird, wenn aus dem Vergleich durch die Paritätsvergleichseinheit bestimmt wird, dass keine Paritätsfehler existieren; **dadurch gekennzeichnet, dass**:
der Paritätsbereich (13) einen ersten Paritätsbereich und einen zweiten Paritätsbereich beinhaltet, von denen jeder aus wenigstens einer Paritätszelle erstellt ist, die durch eine Farbe gebildet ist, die durch Paritätsdaten bestimmt wurde, die aus einem Codewert wenigstens einer entsprechenden Datenzelle erhalten wurden, wobei ein Paritätsverfahren, das auf den ersten Paritätsbereich angewandt wird, unterschiedlich zu jenem ist, das auf den zweiten Paritätsbereich angewandt wird, wobei sowohl der erste als auch der zweite Paritätsbereich für sich dafür verwendet werden können, zu bestimmen, ob Farben, die in den Datenzellen ausgedrückt wurden, in Abhängigkeit von den Zieldaten korrekt ausgedrückt wurden; und
die Paritätsvergleichseinheit zwei Paritätswerte unter Verwendung der aus den Zellen in dem Datenbereich (11) erkannten Farben berechnet, die verwendet worden waren, jeweils den ersten Paritätsbereich und den zweiten Paritätsbereich entsprechend jedes Paritätsverfahrens, das hierauf angewandt wurde, zu bilden, zwei zweite Paritätswerte unter Verwendung der aus den Zellen in dem ersten Paritätsbereich und dem zweiten Paritätsbereich erkannten Farben entsprechend jedes hierauf jeweils angewandten Paritätsverfahrens berechnet, und jeweils die zwei Paritätswerte, die aus dem Datenbereich (11) erhalten wurden, mit den zwei Paritätswerten, die aus dem Paritätsbereich (13) erhalten wurden, vergleicht, um zu bestimmen, ob irgendwelche Paritätsfehler existieren.

17. Vorrichtung nach Anspruch 16, bei der die Eingabeeinheit ein Codebild empfängt, das ferner einen Referenzbereich (15) beeinhaltet, der Interpretationsgrundlagen für den Datenbereich (11) bereitstellt; und
die Informationsunterscheidungseinheit Farben auf Grundlage des Referenzbereichs jeder Zelle bestimmt, die in den Datenbereich (11) ausgedrückt sind.

## Revendications

1. Procédé d'encodage d'une image de code, consistant à :
(a) établir une table de conversion de code dans laquelle différentes couleurs sont mappées en fonction de caractères reconnaissables comprenant des chiffres et des symboles ;
(b) définir les données cibles à encoder ;
(c) encoder les données cibles en utilisant la table de conversion de code et en formant une zone de données (11) avec une image réalisée en une pluralité de couleurs différentes, la zone de données étant constituée d'au moins une cellule de données ;
(d) établir une zone de parité (13) pour déterminer si l'image formée dans la zone de données (11) est appropriée ou non pour les données cibles ; et
(e) obtenir une image de code physique ou électronique (79a, 79b) à partir de l'image pour la zone de données (11) et la zone de parité (13), dans lequel l'image de code physique ou électronique (79a, 79b) doit être prévue dans une zone d'arrière-plan, la pluralité de couleurs différentes de la zone de données (11) distinguant la zone de données (11) de la zone d'arrière-plan ;
**caractérisé en ce que** :
la zone de parité (13) comprend une première zone de parité et une deuxième zone de parité, chacune étant constituée d'au moins une cellule de parité qui est réalisée en une couleur déterminée par des données de parité obtenues à partir d'une valeur de code d'au moins une cellule de données correspondante, dans lequel un procédé de parité appliqué à la première zone de parité est différent de celui appliqué à la deuxième zone de parité, et dans lequel chacune des première et deuxième zones de parité peut être utilisée seule pour déterminer si les couleurs exprimées dans les cellules de données ont été ou non correctement exprimées en fonction des données cibles.

2. Procédé selon la revendication 1, dans lequel l'étape (d) consiste à :
obtenir une valeur de code définie pour les couleurs exprimées dans chacune des cellules de données de la zone de données (11) ;
obtenir des valeurs de code de parité sur la base des valeurs de code des cellules de données ; et
obtenir des couleurs pour les valeurs de code de parité et exprimer les cellules de parité de la zone de parité (13) en les couleurs.

3. Procédé selon la revendication 1, dans lequel les données cibles sont des informations cibles réelles ou des informations de position associées à une position à un emplacement de mémorisation où les informations cibles réelles sont mémorisées.

4. Produit-programme d'ordinateur comprenant un jeu d'instructions adapté pour exécuter les étapes définies dans la revendication 1 lorsque ledit programme d'ordinateur s'exécute sur un ordinateur.

5. Procédé selon la revendication 1, comprenant en outre l'étape consistant à :
établir une zone de référence (15) dans laquelle des couleurs de base pour réaliser des bases d'interprétation pour les couleurs exprimées dans la zone de données (11) sont fournies.

6. Dispositif d'encodage d'image de code comprenant :
une unité de mémorisation pour mémoriser une table de conversion de code dans laquelle différentes couleurs sont mappées en fonction de caractères reconnaissables comprenant des chiffres et des symboles ;
une unité de formation de zone de données pour recevoir des données cibles à encoder et pour encoder les données cibles en utilisant la table de conversion de code pour former une image à exprimer dans une zone de données (11), la zone de données étant constituée d'au moins une cellule de données et étant constituée d'une pluralité de couleurs différentes ;
une unité de formation de zone de parité pour former une zone de parité (13) pour déterminer si l'image formée dans la zone de données (11) est appropriée ou non pour les données cibles lors du décodage ; et
une unité de formation d'image de code pour former une image de code physique ou électronique (79a, 79b) à partir de l'image formée dans la zone de données (11) et la zone de parité (13), dans lequel l'unité de formation d'image de code est agencée pour former l'image de code physique ou électronique (79a, 79b) dans une zone d'arrière-plan, la pluralité de couleurs différentes de la zone de données (11) distinguant la zone de données (11) de la zone d'arrière-plan ;
**caractérisé en ce que** :
la zone de parité (13) comprend une première zone de parité et une deuxième zone de parité, chacune étant constituée d'au moins une cellule de parité qui est formée par une couleur déterminée par des données de parité obtenues à partir d'une valeur de code d'au moins une cellule de données correspondante, dans lequel un procédé de parité appliqué à la première zone de parité est différent de celui appliqué à la deuxième zone de parité, et dans lequel chacune des première et deuxième zones de parité peut être utilisée seule pour déterminer si les couleurs exprimées dans les cellules de données ont été ou non correctement exprimées en fonction des données cibles.

7. Dispositif selon la revendication 6, comprenant en outre :
une unité de génération de zone de référence pour établir une zone de référence (15) dans laquelle les couleurs de base pour réaliser des bases d'interprétation de couleurs à exprimer dans la zone de données (11) sont fournies.

8. Procédé de décodage d'image de code consistant à :
(a) recevoir une image de code comprenant une zone de données (11) dans laquelle des données cibles sont encodées et exprimées en tant qu'image, la zone de données (11) étant constituée d'au moins une cellule et étant constituée d'une pluralité de couleurs différentes, et une zone de parité (13) pour déterminer si l'image formée dans la zone de données (11) est appropriée pour les données cibles, la zone de données (11) étant prévue dans une zone d'arrière-plan, la pluralité de couleurs différentes de la zone de données (11) distinguant la zone de données (11) de la zone d'arrière-plan ;
(b) discerner la zone de données (11) et la zone de parité (13) dans l'image de code l'une de l'autre et de la zone d'arrière-plan ;
(c) reconnaître les couleurs à partir des images exprimées dans la zone de données (11) et la zone de parité (13) ;
(d) déterminer s'il existe des erreurs de parité en calculant une valeur de parité en utilisant les couleurs reconnues à partir de l'image dans la zone de données (11), en calculant une valeur de parité en utilisant les couleurs reconnues à partir de l'image dans la zone de parité (13), et en comparant la valeur de parité de la zone de parité avec la valeur de parité de la zone de données ; et
(e) décoder l'image encodée en utilisant les couleurs reconnues à partir de la zone de données (11) et en extrayant les données cibles constituées de caractères reconnaissables comprenant des chiffres et des symboles, s'il est déterminé qu'il n'y a aucune erreur de parité ;
**caractérisé en ce que** :
la zone de parité (13) comprend une première zone de parité et une deuxième zone de parité, chacune étant constituée d'au moins une cellule de parité qui est formée par une couleur déterminée par des données de parité obtenues à partir d'une valeur de code d'au moins une cellule de données correspondante, dans lequel un procédé de parité appliqué à la première zone de parité est différent de celui appliqué à la deuxième zone de parité, dans lequel chacune des première et deuxième zones de parité peut être utilisée seule pour déterminer si les couleurs exprimées dans les cellules de données ont été ou non correctement exprimées en fonction des données cibles ; et
l'étape (d) consiste à :
(d1) calculer deux valeurs de parité en utilisant les couleurs reconnues à partir des cellules dans la zone de données (11) qui ont été utilisées pour former la première zone de parité et la deuxième zone de parité, conformément à chaque procédé de parité appliqué à celles-ci, respectivement,
(d2) calculer deux valeurs de parité en utilisant les couleurs reconnues à partir des cellules dans la première zone de parité et la deuxième zone de parité, conformément à chaque procédé de parité appliqué à celles-ci, respectivement, et
(d3) comparer les deux valeurs de parité obtenues à partir de la zone de données (11) avec les deux valeurs de parité obtenues à partir de la zone de parité (13), respectivement, pour déterminer s'il existe des erreurs de parité.

9. Produit-programme d'ordinateur comprenant un jeu d'instructions adapté pour exécuter les étapes définies dans la revendication 8 lorsque ledit programme d'ordinateur s'exécute sur un ordinateur.

10. Procédé selon la revendication 8, dans lequel, avant l'exécution de l'étape (d), des paramètres sont établis pour normaliser les couleurs, reconnues à partir de l'image de code en considérant un environnement où l'image de code a été lue et les couleurs reconnues à partir de l'image de code sont normalisées sur la base des paramètres ; et
si des erreurs de parité sont générées à l'étape (e), les paramètres sont réinitialisés et les étapes décrites ci-dessus sont répétées.

11. Procédé selon la revendication 10, dans lequel les paramètres sont fixés en fonction de l'environnement d'éclairage lorsqu'un arrière-plan blanc est photographié en utilisant un dispositif d'entrée d'image, avant qu'une image de code ne soit reçue.

12. Procédé selon la revendication 11, dans lequel des paramètres optimisés sont prédéterminés et mémorisés en fonction de divers environnements d'éclairage, et un utilisateur sélectionne un paramètre qui est le plus approprié pour son environnement.

13. Procédé selon la revendication 11, dans lequel, lorsque les paramètres sont réinitialisés, la répartition dés couleurs ou des ombres obtenues à partir des cellules d'une image de code est établie, et les paramètres et leurs valeurs pondérées sont réinitialisés avec référence à la répartition établie.

14. Procédé selon la revendication 8, comprenant les étapes consistant à :
recevoir une image de code comportant une zone de données (11)
dans laquelle des données cibles sont encodées avec des couleurs dans une image, et une zone de référence (15) dans laquelle des couleurs de base sont exprimées pour fournir des bases d'interprétation de couleurs exprimées dans la zone de données (11) ; et
déterminer la couleur de chaque cellule exprimée dans la zone de données (11) sur la base de la zone de référence.

15. Procédé selon la revendication 8, dans lequel, lorsque des informations de commande, dans lesquelles des commandes ou des services qui peuvent être utilisés en utilisant les données cibles sont fixés, sont en outre incluses dans l'image de code, la fourniture des commandes ou des services conformément aux informations de commande est en outre incluse.

16. Dispositif de décodage d'image de code comprenant :
une unité de mémorisation pour mémoriser une table de conversion de code dans laquelle différentes couleurs sont mappées en fonction de caractères reconnaissables comprenant des chiffres et des symboles ;
une unité d'entrée pour recevoir une image de code (91a, 91b) comprenant une zone de données (11) dans laquelle des données cibles sont encodées et exprimées en tant qu'image, la zone de données (11) étant constituée d'au moins une cellule et étant constituée d'une pluralité de couleurs différentes, et une zone de parité (13) pour déterminer si l'image formée dans la zone de données (11) est appropriée pour les données cibles, la zone de données (11) étant prévue dans une zone d'arrière-plan, la pluralité de couleurs différentes de la zone de données (11) distinguant la zone de données (11) de la zone d'arrière-plan ;
une unité de discernement d'informations pour établir une distinction entre une zone de données (11) et une zone de parité (13) et une zone d'arrière-plan de l'image de code et faire une discrimination entre les couleurs des cellules exprimées dans la zone de données (11) et la zone de parité (13) et les déterminer ;
une unité de comparaison de parité pour déterminer s'il y a des erreurs de parité en calculant une valeur de parité en fonction des couleurs reconnues à partir de l'image de la zone de données (11), en calculant une valeur de parité en fonction des couleurs reconnues à partir de l'image de la zone de parité (13), et en comparant la valeur de parité de la zone de parité avec la valeur de parité de la zone de données ; et
une unité d'extraction de données pour extraire des données cibles constituées de caractères reconnaissables comprenant des chiffres et des symboles en décodant l'image de code reçue en fonction des couleurs reconnues à partir de la zone de données (11) conformément à la table de conversion de code, s'il est déterminé à partir de la comparaison effectuée par l'unité de comparaison de parité qu'il n'y a aucune erreur de parité ; **caractérisé en ce que** :
la zone de parité (13) comprend une première zone de parité et une deuxième zone de parité, chacune étant constituée d'au moins une cellule de parité qui est formée par une couleur déterminée par des données de parité obtenues à partir d'une valeur de code d'au moins une cellule de données correspondante, dans lequel un procédé de parité appliqué à la première zone de parité est différent de celui appliqué à la deuxième zone de parité, dans lequel chacune des première et deuxième zones de parité peut être utilisée seule pour déterminer si les couleurs exprimées dans les cellules de données ont été ou non correctement exprimées en fonction des données cibles ; et
l'unité de comparaison de parité calcule deux valeurs de parité en utilisant les couleurs reconnues à partir des cellules dans la zone de données (11) qui ont été utilisées pour former la première zone de parité et la deuxième zone de parité, conformément à chaque procédé de parité appliqué à celles-ci, respectivement, calcule deux deuxièmes valeurs de parité en utilisant les couleurs reconnues à partir des cellules dans la première zone de parité et la deuxième zone de parité, conformément à chaque procédé de parité appliqué à celles-ci, respectivement, et compare les deux valeurs de parité obtenues à partir de la zone de données (11) avec les deux valeurs de parité obtenues à partir de la zone de parité (13), respectivement, pour déterminer s'il y a des erreurs de parité.

17. Dispositif selon la revendication 16, dans lequel l'unité d'entrée reçoit une image de code comprenant en outre une zone de référence (15) qui fournit des bases d'interprétation pour la zone de données (11) ; et
l'unité de discernement d'informations détermine les couleurs de chaque cellule exprimées dans la zone de données (11) sur la base de la zone de référence.
